# EUROPEAN PATENT APPLICATION

(11) **EP 4 644 823 A2**
(43) Date of publication of application: **05.11.2025**
(21) Application number: 25173354.9
(22) Date of filing: 29.04.2025
(51) Int. Cl.: F41C 33/02, F41G 1/35

(54) **A FIREARM WITH AN ILLUMINATION MODULE AND A HOLSTER**

(30) Priority: 03.05.2024 US 202418654748
(71) Applicant: Spielberger, Peter, 1220 Wien (AT)
(72) Inventor: Spielberger, Peter, 1220 Wien (AT)
(74) Representative: Patentanwälte Pinter & Weiss OG

(57) **Abstract**

To provide a firearm (10) with an illumination module (1) and a holster (100) to accommodate a firearm (10), wherein practicality and efficiency of the firearm (10) and the holster (100) is improved while also increasing gun safety in using said firearm (10) and holster (100), wherein the illumination module (1) comprises a lens array (2) with at least two lenses (21, 22), wherein a first one of the at least two lenses (21, 22) of the lens array (2) emitting a first cone-shaped light beam (LB1) with a first radiation angle (α1) and a second one of the at least two lenses (21, 22) of the lens array (2) emitting a second cone-shaped light beam (LB2) with a second radiation angle (α2), wherein the first radiation angle (α1) of the first light beam (LB1) and the second radiation angle (α2) of the second light beam (LB2) are different and in that the holster (100) comprises a locking mechanism (110) with a locking element (120) and an actuator element (130), wherein the locking element (120) is movable between a locking position (LP), in which the firearm (10) is locked in the holster (100), and an unlocking position (UP), in which the firearm (10) may be removed from the holster (100).

## Description

### Technical Field of the Invention

The present invention pertains to a firearm with an illumination module, said illumination module is mounted on the firearm, wherein the illumination module comprises a light source and a switch element for activating or deactivating the light source, wherein the firearm comprises a barrel with an axial barrel axis, wherein the illumination module further comprises a lens array with at least two lenses, the lenses emitting light received from the light source when the light source is activated, a first one of the at least two lenses of the lens array emitting a first cone-shaped light beam with a first radiation angle and a second one of the at least two lenses of the lens array emitting a second cone-shaped light beam with a second radiation angle, wherein the first and second light beams are emitted at least partially in direction of the barrel axis and away from the firearm with an apex of the cone-shaped light beams at the respective lens. The present invention further pertains to a holster for accommodating a firearm.

### Description of the Prior Art

Illumination modules for weapons are well known particularly in the field of application of military and police special units. Fixed directly to the firearm, for example a handgun, the task of these illumination modules consists of illuminating the immediate environment of the weapon to an extent that a user, e.g., a soldier, an officer or a marksman is able to recognize and assess the situation. Such illumination modules are also referred to as tactical accessory for the weapon.

To fulfill this task, the illumination modules commonly comprise lamps, searchlights or the like. Furthermore, lasers can be used as well, wherein said laser are normally used for target marking.

For example, US 2012/0124885 A1, US 7,726,061 B1 or US 2008/0110947 A1 shows an illumination module which is fixed in the area of a muzzle or a trigger guard of a handgun. Designated as handguns are those firearms with which the barrel including a slide has a total length of less than 30 cm. When such conventional illumination modules with a lamp and/or a laser are used, these are usually relatively voluminous and bulky in design, which is quite unpractical and due to the size of certain lamps, for example, heat generation of the illumination module is problematic.

Additionally, due to the voluminous and bulky in design, the problem that the storage pocket, usually referred to as holster, does not allow the weapon including the illumination module to be accommodated without difficulty, especially in a holster with automatic retention. If a holster which is adapted to suit the illumination module is used, then this in turn is unsuitable for accommodating the weapon without the illumination module, as secure storage of the weapon cannot be guaranteed due to the poor coverage of the trigger guard area of the gun in the holster.

Furthermore, it is necessary to illuminate not only the immediate environment of the weapon but also an area extending further away from the muzzle of the weapon at a certain distance, in order for the soldiers, officers or marksmen to properly recognize and assess the situation. Usually, certain adjustment means are comprised in the illumination modules, which can be actuated by said user, e.g., soldiers, officers or marksmen to adjust, for example, a radiation angle of the lamp. But since weapons are used in tough environment, such adjusting means can be damage, wherein the illumination of the environment of the weapon cannot be adjusted anymore.

### Summary of the Invention

It is an object of the present invention to provide a firearm with an illumination module and a holster to accommodate a firearm, to improve practicality and efficiency of the firearm and the holster while also increasing gun safety in using said firearm and holster.

This object is achieved with the features of the independent claims. According to the invention the first radiation angle of the first light beam and the second radiation angle of the second light beam are different. Besides using the at least two lenses to reduce the built size of the illumination module, due to the different radiation angles of the at least two lenses different areas of the environment of the user are illuminated sufficiently, especially to improve assessing dangerous situations.

In a preferred embodiment, the illumination module further comprises an electrical energy storage and electrical contacts for charging the electrical energy storage when an electric energy source is connected to the electrical contacts, wherein the illumination module is configured to automatically deactivate the light source when the electrical contacts are connected to the electric energy source. Preferably, the electrical contacts of the firearm are connected to the electrical energy source, when the firearm is arranged in a holster for the firearm. By automatically deactivating the illumination module, practicality is increased significantly since the user can stay focused on the situation, e.g., an arrest or other stressful situations, without looking away from said situation to deactivate the illumination module manually. Besides saving electrical energy by automatically deactivating the illumination module, also heat development of the illumination module can be minimized, especially when the firearm is accommodated in the holster. As the firearm is normally arranged in the holster for most of the time, wherein the electrical contacts of the firearm are connected to the electrical energy source of the holster, it can be ensured that the electrical energy storage of the illumination module is always sufficiently charged. Furthermore, since the electrical energy storage of the illumination module is charged as the firearm is arranged in the holster, the illumination module can stay mounted on the firearm, wherein demounting said illumination module from the firearm in order to charge it or to swap the electrical energy storage is not necessary. Demounting the illumination module from the firearm and re-mounting the illumination module onto the firearm could make it necessary to re-calibrate the illumination module, e.g. a laser of the illumination module, which is quite laborious.

The illumination module preferably further comprises a programmable control unit, which is designed to control an intensity of the light emitted by the light source. Being programmable enables the control unit to define different preset operation modes of the light source, which enhances the practicality and flexibility of the illumination module. For example, the control unit can use different actuation of the switch element as an input, like a certain duration or sequence of the actuation, to initiate a certain preset operation mode. The programmable control unit may be designed as being field programmable.

In a preferred embodiment, the light source comprises at least one light emitting element for each one of the at least two lenses. This further enhances the flexibility and practicality of the illumination module, in that each light emitting element can be operated individually to ensure a sufficient illumination of the environment of the user, especially in dangerous situations. Furthermore, by dividing the light source into light emitting elements, heat development and built size of the illumination module can be minimized.

The illumination module preferably further comprises at least one laser and a laser switch element for activating or deactivating the at least one laser, said laser, when activated, emitting a laser light beam at least partially in direction of the barrel axis and away from the firearm.

Additionally, the programmable control unit is further provided to control an intensity of the at least one laser. In addition to illuminating the surroundings of the user, the at least one laser makes it easier to aim at any targeted objects by means of a laser-induced marking on the targeted object, wherein the flexibility and practicality of the illumination module is further enhanced. Additionally, the operation mode of the at least one laser can be set to a steady or a blinking laser light beam. The compact built size of the illumination module enables arranging the optical axis of the laser light beam close to the barrel axis to reduce offset.

Furthermore, the illumination module preferably comprises a laser receiver sensor for detecting at least a portion of the emitted laser light beam being reflected back towards the firearm by a targeted object, wherein the illumination module further comprises an evaluation unit for determining an object distance between the illumination module and the targeted object 30 based on the reflected portion of said laser light beam. The programmable control unit may further be provided to control the intensity of the light emitted by the light source based on the determined object distance. Since the at least one laser is already used for targeting objects, it is useful to measure the object distance between the illumination module and the targeted object in order to enable a more efficient illumination of the surrounding of the user. Especially, in case the light source comprises light emitting elements, the light emitting elements of the light source can be individually activated or deactivated depending on the determined object distance. In this way, energy consumption as well as heat development of the light source is significantly reduced.

In a preferred embodiment, the illumination module comprises two lasers, wherein each of the two lasers emit laser light with a certain wavelength, wherein the wavelength of the laser lights of the two lasers are different. Since certain situations require to differentiate between two users, e.g., if two or more officers are assessing a situation together, each user can select a laser with a certain wavelength of the laser light as well as a steady or a blinking laser. In this case, for example, four officers can be differentiated.

In a preferred embodiment, the illumination module comprises a temperature sensor, which is arranged in the area of the light source, wherein the programmable control unit is further designed to control the intensity of the light emitted by the light source based on a temperature measured by the temperature sensor. By dimming the light source, in discrete intensity steps, for example, damage of the light source due to overheating can be avoided and the life span of the light source can be increased. By decreasing the light intensity slowly in discrete steps, the person carrying the firearm does usually not notice the decrease in light intensity, at least not in the beginning.

According to another aspect of the invention, the holster for accommodating a firearm, comprises a locking mechanism, which locking mechanism comprises a locking element and an actuator element, wherein the locking element is movable between a locking position, in which the firearm is locked in the holster, and an unlocking position, in which the firearm may be removed from the holster, wherein the actuator element is connected to the locking element and the actuator element is prestressed when the locking element is in the locking position, wherein the locking element is held in the locking position by holding means, in that when the locking element is moved out of the locking position, the prestressed actuator element is relieved and acts on the locking element to move said locking element into the unlocking position. Preferably, the prestressed actuator element holds the locking element in the locking position. In this way, practicality of the holster is increased significantly. Furthermore, since the firearm can be safely secured in the holster by the locking mechanism, gun safety is enhanced.

In a preferred embodiment, the holster further comprises a fastening element mounted to the holster, the holster being rotateable relative to the fastening element, wherein, when rotated, the holster snaps-in into predefined snap-in positions provided in a given rotation angle of the holster. The practicality and flexibility of the holster is further increased since depending on the usage, the users can arrange the holster in different angles to themselves. Furthermore, the holster can be rotated 360° relative to the fastening element.

Furthermore, the holster preferably comprises a firearm sensor unit, which firearm sensor unit is configured to interact with the firearm when said firearm is accommodated in the holster in order to generate or interrupt an electrical signal and in that the holster further comprises a communication unit, which communication unit is configured to control an external device depending on the generated or interrupted electrical signal by the firearm sensor unit when the holster is used. In this way, for example as the firearm is drawn from the holster or the firearm is accommodated in said holster by the user, different external devices can be activated or deactivated, for example, a bodycam of the user or a tactical accessory of the firearm like an electronic sight. This feature enhances flexibility and practicality of the holster as well as of the firearm.

### Brief Description of the Drawings

The present invention is described in greater detail in the following with reference to Fig. 1 to 5, which show exemplary, schematic and non-limiting advantageous embodiments of the invention. In the drawings:
Fig. 1 shows a firearm with an illumination module in a side view,
Fig. 2 shows part of the firearm with illumination module in an isometric view,
Fig. 3 shows schematically a first and second light beam of the lens array,
Fig. 4 shows a holster accommodating a firearm in a locking position in an isometric view, and
Fig. 5 shows the holster accommodating a firearm in an unlocking position in side view.

### Detailed Description of the Drawings

The invention is pertained to firearms which comprises handguns, like pistols, revolvers, and long guns, like rifles, shotguns, carbines. The invention is particularly suitable for handguns and, hence the invention will be described by means of the example of a handgun in the form of pistol.

The coordinate system (x-, y- and z-direction) shown in the figures, in which the x-axis points in the direction of the axis of the barrel 11 of the firearm 10, merely serves for explanation purposes.

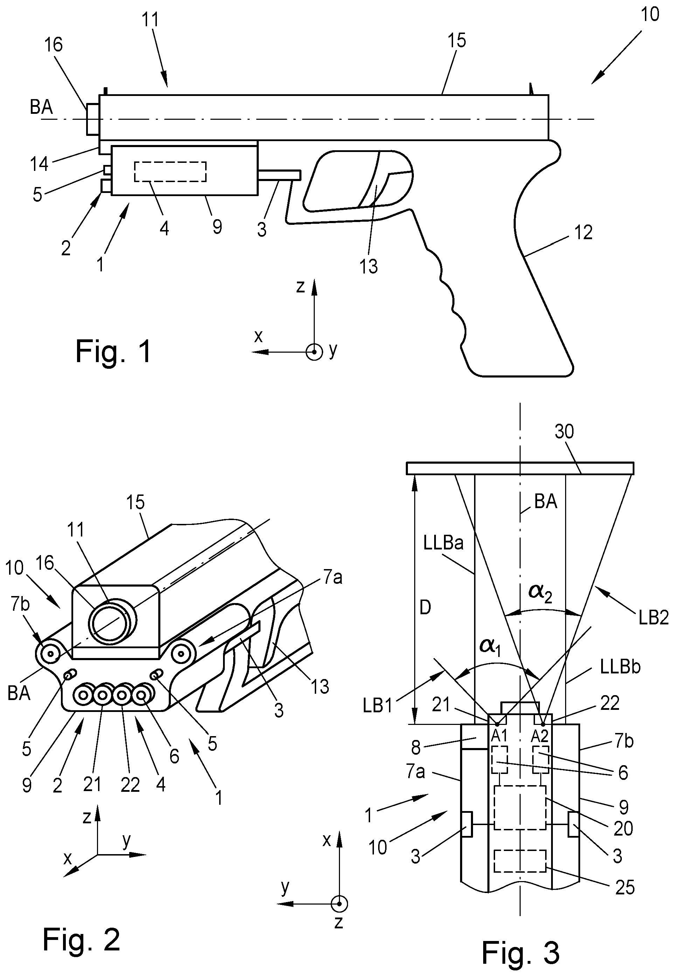

Fig. 1 shows an exemplarily embodiment of a firearm (handgun) 10 as used, for example, in the military or by law enforcement officers. As is known, handguns basically comprise a barrel 11, a frame 12 and a trigger 13. The firearm 10 may also comprise a slide (upper receiver) 15, like a handgun. The barrel 11 comprises an axial barrel axis BA. The barrel axis BA is indicated, for example, in Fig. 1 along the x-direction. Furthermore, the barrel 11 has a muzzle 16. Also, other firearms have similar designs.

An illumination module 1 according to the invention is arranged on the firearm 10. As shown in Fig. 1, the illumination module 1 is preferably arranged in the area of the barrel 11 of the firearm 10. Of course, depending on the type of firearm 10, other arrangements of the illumination module 1 on said firearm 10 can be advantageous. For arranging the illumination module 1 on the firearm 10, different attachments can be provided. Firearms 10 are usually equipped with a mounting arrangement, for example known as a Picatinny- or NATO-rail 14, in the area below the barrel 11, which allows a wide variety of tactical accessories to be attached to the firearm 10. As exemplary shown in Fig. 1, the illumination module 1 can be attached to said mounting arrangement, like a Picatinny rail 14, of the firearm 10. Therefore, the illumination module 1 may comprise a mounting rail corresponding to said mounting arrangement, like a Picatinny rail 14. It is of course also conceivable that any other clamping or mounting system could be used to attach the illumination module 1 to the firearm 10. As shown in Fig. 1, preferably the illumination module 1 is not protruding beyond the muzzle 16 of the barrel 11.

In general, the illumination module 1 can be fixed to the firearm 10 or can be releasable mounted on the firearm 10.

The illumination module 1 comprises a light source 4 and a switch element 3 for activating or deactivating the light source 4. A suitable wired or wireless connection between the switch element 3 and the light source 4 may be provided to activate or deactivate the light source 4. As the illumination module 1 is mounted on the firearm 10, the switch element 3 is preferably arranged in the area of the trigger to be easily reached by a finger of the user, when the user is holding the firearm 10. For example, the switch element 3 may be designed as a mechanical switch (e.g., a button or similar) or as a capacitive switch (also contactless switching is possible) and may be operated with a finger of the user. Of course, more than one switch element 3 can be provided on the illumination module 1. Furthermore, switch elements 3 can be arranged on both sides of the firearm 10, for example a switch element 3 on the left and on the right side of the firearm 10, as is schematically shown in Fig. 3. Therein the switch elements 3 may be designed differently (e.g., one as a mechanical switch, the other as a capacity switch). It is also possible that as the firearm 10 is accommodated in a holster 100, the switch is automatically actuated and the light source 4 is deactivated.

The illumination module 1 further comprises a lens array 2 with at least two lenses 21, 22. As shown in Fig. 2, the illumination module 1 comprises preferably four lenses. Of course, depending on the type of firearm 10 and/or the usage of the illumination module 1, any other number of lenses is conceivable and can be more advantageous. However, in order to describe the invention in a simple manner, the illumination module 1 will be discussed with two lenses 21, 22 in the following with reference to the embodiment in Fig. 3. The at least two lenses 21, 22 are preferably made of plastic, silicone, or glass or any other suitable optical material.

The light source 4 can be designed in various ways and comprises at least one light emitting element 6, for example, comprising a number of light emitting diodes. Preferably the light source 4 comprises at least one light emitting element 6 for each one of the at least two lenses 21, 22 (as in Fig.3), but also a light emitting element 6 for more than one of the lenses 21, 22 is conceivable. As schematically shown in Fig. 2, for each of the four lenses, one light emitting element 6 is provided. For example, the at least one light emitting element 6 can be designed as a light emitting diode having a certain light color (i.e. a range of wavelengths). Furthermore, the light emitting element 6 can comprise a number of light emitting diodes having a certain light color. Preferably, the light emitted by the light source 4 has a light color over 4000 Kelvin.

The lenses 21, 22 of the lens array 2 are emitting light received from the light source 4 when the light source 4 is activated. This requires of course a certain arrangement of the light source 4 and the lenses 21, 22. The lenses 21, 22 can directly receive the light emitted from the light source 4, or the light emitted by the light source 4 can also be guided to the lenses 21, 22 with optical components, like fiber optics, light guides, mirrors or other optical components, for example. The lenses 21, 22 of the lens array 2 receive the light from the light source 4, shape the light and emit the light.

As schematically illustrated in Fig. 3, a first one of the at least two lenses 21 is emitting a first cone-shaped light beam LB1 with a first radiation angle α1 and a second one of the at least two lenses 22 of the lens array 2 emitting a second cone-shaped light beam LB2 with a second radiation angle α2. The first and second light beams LB1, LB2 are emitted at least partially in direction of the barrel axis BA and away from the firearm 10.

The phrase "at least partially in direction of the barrel axis BA" means that at least some light of the emitted light beams LB1, LB2 illuminates an object at a distance from the illumination module 1 in direction of the barrel axis BA away from the respective lens 21, 22.

The usage of the term "cone-shaped" is not to be understood as being limiting to idealized right circular cones but includes also oblique cones or cones with non-circular base. As shown in Fig. 3, each cone-shaped light beam LB1, LB2 originates at one of the lenses 21, 22 and widens cone-shaped in a direction away form an apex A1, A2 of the respective light beam LB1, LB2. The apex serves only for explanatory reasons. In the embodiment of Fig. 3, the apexes A1, A2 of the cone-shaped light beams LB1, LB2 are preferably at or in the region of the respective lens 21, 22. In Fig. 3 the apexes A1, A2 schematically indicate the position of the two lenses 21, 22, from which each light beam LB1, LB2 originates.

The light emitted by a lens 21, 22 does of course not have a sharp boundary, but the intensity of the light (light intensity) decreases from the center of the cone-shaped light beam LB1, LB2 with increasing opening angle. The opening angle at which the light intensity is 50% of the light intensity in the center of the cone-shaped light beams LB1, LB2 is referred to as radiation angle. There is of course also light outside of the cone defined by the radiation angle, but with lower light intensity.

The light intensity of a light beam LB1, LB2 does of course also decrease with increasing distance from the respective lens 21, 22. The term "effective illumination distance" describes in this context, a distance of the light beam LB1, LB2 from the respective lens 21, 22 in direction of the barrel axis BA at which the light intensity of the light beam LB1, LB2 decreases by 25%. With such a light intensity a targeted object at the effective illumination distance is still illuminated sufficiently. However, the effective illumination distance merely serves explanation purposes.

According to the invention the first radiation angle α1 of the first light beam LB1 and the second radiation angle α2 of the second light beam LB2 are different. In this way a certain overlapping area of the light beams LB1, LB2 is ensured in order to illuminate different areas in the surroundings of the firearm 10.

As is known, the shape of the lens defines the shape of the emitted light beam and also the radiation angle. According to the invention, the shape of the at least two lenses 21, 22 can be designed in various ways, as long as both radiation angles are different. In case of Fig. 3, the first radiation angle α1 of the first light beam LB1 is larger than the second radiation angle α2 of the second light beam LB2 (α1 > α2). Of course, the first radiation angle α1 of the first light beam LB1 may also be smaller than the second radiation angle α2 of the second light beam LB2 (α1 < α2).

Assuming a substantially constant intensity of the light source 4, the effective illumination distance of the respective light beam changes depending on the size of the radiation angle. If the radiation angle increases, the effective illumination distance of the light beam decreases. In case of Fig. 3, the first radiation angle α1 of the first light beam LB1 is larger than the second radiation angle α2 of the second light beam LB2 (α1 > α2). Therefore, the first light beam LB1 illuminates a wider area ("floodlight"), however, the effective illumination distance of the first light beam LB1 in direction of the barrel axis BA is shorter compared to the effective illumination distance of the second light beam LB2. The second light beam LB2 is due to its smaller radiation angle more focused and illuminates also an object that is further away from the lens ("spotlight"). Due to the different radiation angles α1, α2 of the at least two lenses 21, 22 different areas of the environment of the user are illuminated more sufficiently, wherein the illumination during assessing situations, especially dangerous situations, is increased. For example, an immediate surrounding of the user (e.g., up to 5 meters from the user) as well as an area extending beyond that immediate surrounding of the user (e.g., over 5 to 20 meters from the user) is illuminated.

The illumination module 1 preferably further comprises at least one laser 7a, 7b and a laser switch element for activating or deactivating the at least one laser 7a, 7b, wherein said laser 7a, 7b, when activated, emitting a laser light beam LLBa, LLBb essentially in direction of the barrel axis BA and away from the firearm 10. The term "essentially" means, that the laser light beam LLBa, LLBb has an angle of maximum ±2° to the barrel axis BA, preferably 0°. Preferably, an adjustment of the laser light beam LLBa, LLBb is made as the illumination module 1 is mounted on the firearm 10, in that the laser light beam LLBa, LLBb has an angle of 0° to the barrel axis BA up to 10 meters from the user. As shown in Fig. 2 and Fig. 3, the illumination module 1 more preferably comprises two lasers 7a, 7b, wherein each one of the two lasers 7a, 7b emit laser light with a certain wavelength, wherein the wavelength of the laser lights of the two lasers 7a, 7b are different. In case of more than one laser, all lasers are usually calibrated.

For example, one of the two lasers 7a may be designed to emit the laser light beam LLBa with a wavelength in a first light spectrum, in the red area of the light spectrum (e.g., between 620 and 750 nm), for example, and the other one of the two lasers 7b may be designed to emit the laser light beam LLBb with a wavelength in a second light spectrum, in the green area of the light spectrum (e.g., between 500 and 570 nm), for example. Of course, the different wavelengths of the lasers should be chosen to be clearly visually distinguishable by users. However, depending on the usage of the illumination module 1, a laser with a wavelength in the infrared area of the light spectrum could also be provided. In case two officers are simultaneously assessing a situation, each officer can be assigned with a certain wavelength of the laser in order to differentiate between laser light of each officer. For example, a switch element 3 of the illumination module 1 may be used as the laser switch element. Alternatively, the switch element 3 may be designed for activating or deactivating the light source 4 and for activating or deactivating the at least one laser 7a, 7b. In case of lasers 7a, 7b with different wavelengths, the user could also select a certain one of the lasers 7a, 7b with the laser switch element.

Preferably, the illumination module 1 further comprises a programmable control unit 20 (indicated in Fig. 3), which is designed to control an intensity of the light emitted by the light source 4. More preferably, the programmable control unit 20 is further provided to control an intensity of the at least one laser 7a, 7b (if present). The term "control an intensity" in this context means a change in brightness of the light, which especially also includes activating and deactivating emitting of light as well as blinking or flashing of the light. The light intensity is preferably change in discrete light intensity steps.

Furthermore, the programmable control unit 20 may be designed to control the intensity of the light emitted by the light source 4 depending on a temperature measured in the area of the light source 4. Therefore, a temperature sensor may be provided for the illumination module 1, which is connected to the control unit 20. Preferably, the temperature sensor is arranged in the area of the light source 4. For example, if the temperature in the area of the light source 4 (e.g., of the light source 4 itself) exceeds a predefined maximal temperature, the intensity of the light emitted by the light source 4 is reduced by the programmable control unit 20. When the temperature in the area of the light source 4 decreases, the intensity of the light emitted by the light source 4 can be increased, if need be.

For example, the programmable control unit 20 may be designed as microprocessor-based hardware, like as a microcontroller. The programmable control unit 20 may also be designed as being field programmable. The programmable control unit 20 may be designed as integrated circuit (IC), like a field-programmable gate array (FPGA). In that way, a user can program or reprogram the programmable control unit 20 after manufacture, in particular to configure hardware of the programmable control unit 20. The illumination module 1 is therefore more customizable by the user compared to a microcontroller as the programmable control unit 20. The programmable control unit 20 may be connected to the switch element 3 via a suitable wired or wireless connection. Furthermore, if the laser switch element is provided separately from the switch element 3, the laser switch element may also be connected to the programmable control unit 20 via a suitable wired or wireless connection.

The term "programmable control unit" in this context means, that the control unit 20 may be implemented as having preset operation modes for the illumination module 1. In case the programmable control unit 20 is designed as being field programmable, the user may program or reprogram certain preset operation modes. For example, depending on the actuation of the switch element 3, e.g., a certain duration or sequence of the actuation, a preset operation mode is selected. For example, a preset operation mode may initiate controlling the intensity of the light emitted by the light source 4. In that way the user can switch between a steady or a blinking light by pressing the switch element 3 in a predefined manner. In another possible and preferred embodiment, a preset operation mode may initiate activating or deactivating the two lasers 7a, 7b. In the case two lasers 7a, 7b with different wavelengths are provided in the illumination module 1, the user can select the laser with the preferred wavelength.

Furthermore, the illumination module 1 comprises an electrical energy storage 25 and electrical contacts 5 for charging the electrical energy storage 25 when an electric energy source is connected to the electrical contacts 5. Advantageously, the illumination module 1 is configured to automatically deactivate the light source 4 and/or the at least one laser 7a, 7b when the electrical contacts 5 are connected to the electric energy source. As shown in Fig. 1 and 2, for example, the electrical contacts 5 may be designed as exposed pins, which can be inserted in corresponding electrical contacts of the electric energy source. The electric energy source may be integrated in a holster 100 for the firearm 10. The electrical contacts 5 of the illumination module 1 are preferably connected to the electrical energy source, when the firearm 10 is arranged in said holster 100 of the firearm 10, as will be describe in the following in more detail with regard to the holster 100. The electrical energy storage 25 of the illumination module 1 is preferably designed as being rechargeable. Due to the electrical contacts 5 of the illumination module 1, the electrical energy storage 25 can be charged without removing the illumination module 1 from the firearm 10. Since the illumination module 1 is adjusted (calibrated) as it is mounted on the firearm 10, especially the laser light beam LLBa, LLBb in relation to the barrel axis BA is adjusted, removing the illumination module 1 from the firearm 10 would require readjusting of said illumination module 1.

The electrical energy storage 25 of the illumination module 1 is electrically connected to the light source 4, the at least one laser 7a, 7b and the programmable control unit 20 in order to supply said components of the illumination module 1 with electric energy. The electrical energy storage 25 may be designed as having a number of accumulators and/or a number of power capacitors.

Furthermore, the illumination module 1 preferably comprises a laser receiver sensor 8 for detecting at least a portion of the emitted laser light beam LLBa, LLBb being reflected back towards the firearm 10 by the targeted object 30. The laser receiver sensor 8 may be arranged in the area of the at least one laser 7a, 7b. As schematically indicated in Fig. 3, the laser receiver sensor 8 is arranged in the area of the laser 7a. Furthermore, the laser receiver sensor 8 may be designed as a light sensor. The targeted object 30 is merely exemplary illustrated as a wall in Fig. 3. The illumination module 1 further comprises an evaluation unit (not shown in the figures) for determining an object distance D between the illumination module 1 and the targeted object 30 based on the reflected portion of said laser light beam LLBa, LLBb.

For example, as the laser 7a of the illumination module 1 is emitting the laser light beam LLBa, said laser light beam LLBa is hitting the targeted object 30, wherein at least a portion of the laser light beam LLBa is reflected back from the targeted object 30 to the firearm 10. As the reflected portion of the laser light beam LLBa is reaching the firearm 10, said reflected portion is detected by the laser receiver sensor 8 (e.g., by generating an electric signal). The evaluation unit is connected to the laser receiver sensor 8 and is designed to compare the emitted laser light beam LLBa and the reflected portion of the laser light beam LLBa. For example, a time period from emitting the laser light beam LLBa by the laser 7a and receiving the reflected portion of the laser light beam LLBa by the laser receiver sensor 8 may be determined by the evaluation unit. The evaluation unit may use the determined time period as well as the speed of light to evaluate a traveled distance of the laser light beam as the object distance D. Of course, a person skilled in the art knows, that other parameters of the laser light beam may be used to determine the object distance D, for example, a phase shift of the laser light beam LLBa.

The programmable control unit 20 is preferably provided to control the intensity of the light emitted by the light source 4 based on the determined object distance D. For example, the effective illumination distances of the at least two lenses 21, 22 can be stored in the programmable control unit 20. In case the light source 4 comprises light emitting elements 6 for each one of the lenses 21, 22, the programmable control unit 20 compares, e.g., with a suitable algorithm, the determined object distance D with the stored effective illumination distances of the lenses 21, 22 and activates only the light emitting element of the lens (in case of Fig. 3, lens 22 with light beam LB2), which effective illumination distance is closest to said determined object distance D. The other lens 21 can be deactivated to reduce the overall energy consumption and heat development of the light source 4. Of course, this is just one example of implementing controlling of the light source 4 depending on the determined object distance D. A person skilled in the art may foresee comparing the object distance D with other parameters.

The illumination module 1 may comprise a housing 9 to accommodate the afore-described components of the illumination module 1. Preferably, the housing 9 is made of a durable and light material, for example, plastic.

The illumination module 1 may further comprises a module communication unit (not shown), which module communication unit is configured to control an external device depending on a signal by the programmable control unit 20 (e.g., by a preset operation mode) when the illumination module 1 is used. Therefore, the module communication unit may be connected to the programmable control unit 20 via a suitable wired or wireless connection. For example, the module communication unit is designed as microprocessor-based hardware, like as a microcontroller. Furthermore, the module communication unit may be connected to the external device via a suitable wired or wireless connection (e.g., via Bluetooth). The external device might be a bodycam of the user or a tactical accessory for the firearm 10, like an electronic sight or similar. The module communication unit may control said external device, when the illumination module 1 is used, in that the external device is activated or deactivated depending on the signal from the programmable control unit 20.

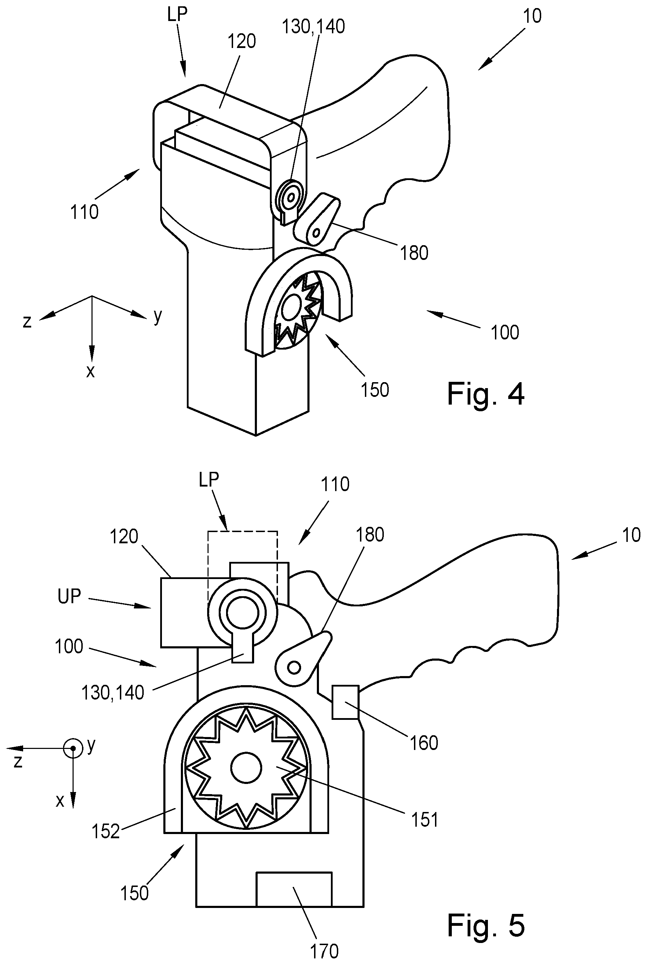

Fig. 4 shows another independent aspect of the invention, wherein a holster 100 for accommodating a firearm 10 is illustrated. The holster 100 comprises a holster pocket for accommodating the firearm 10. Preferably on the firearm 10, which is accommodated in the holster 100, the illumination module 1 according to the invention is arranged. Furthermore, the holster 100 comprises a locking mechanism 110. The locking mechanism 110 comprises a locking element 120 and an actuator element 130.

As shown in Fig. 4 and Fig. 5, the locking element 120 is preferably designed as a rigid safety bar, which is rotatable mounted on the holster 100 (e.g., in this case rotatable around the y-axis). The locking element 120 is movable between a locking position LP, in which the firearm 10 is locked in the holster 100 (as seen in Fig. 4), and an unlocking position UP, in which the firearm 10 may be removed from the holster 100 (as seen in Fig. 5). The locking position is indicated in Fig. 5 with a dashed line. The actuator element 130 is connected to the locking element 120, wherein the actuator element 130 is prestressed in the direction of the unlocking position UP, when the locking element 120 is in the locking position LP. The actuator element 130 is preferably designed as a spring (e.g., a torsion spring). For example, as the locking element 120 is moved from the unlocking position UP to the locking position LP (e.g., manually by the user), the actuator element 130 gets prestressed in the direction of the unlocking position UP.

The locking element 120 is held in the locking position LP by holding means 140. In the locking position LP, the locking element 120 secures the accommodated firearm 10 in the holster 100. Preferably the prestressed actuator element 130 acts as the holding means 140 by holding the locking element 120 in the locking position LP. However, the holding means 140 can also be designed as a separately element of the holster (not shown in the figures). When the locking element 120 is moved out of the locking position LP, the prestressed actuator element 130 is relieved and acts on the locking element 120 to move said locking element 120 into the unlocking position UP.

Additionally, the holster 100 may comprise a release switch 180, which is connected to the locking element 120 and is designed to move the locking element 120 out of the locking position LP. For example, as shown in Fig. 4, if the firearm 10 is in the holster 100 and the locking element 120 is in the locking position LP, the user can actuate the release switch 180, which moves the locking element 120 out of the locking position LP, wherein the prestressed actuator element 130 is relived and moves the locking element 120 into the unlocking position UP. The user may now pull the firearm 10 out of the holster 100. Preferably, the holster 100 comprises a retention mechanism, which additionally locks the firearm 10 in the holster 100, when said firearm 10 is accommodated in the holster 100. The release switch 180 may be connected to said retention mechanism, in that when the release switch 180 is actuated, the locking element 120 is moved out of the locking position LP and the additional lock by the retention mechanism is also disabled, wherein the firearm 10 can be pulled out of the holster 100.

If the holster 100 is empty (e.g., the user has pulled the firearm 10) and the locking element 120 is in the locking position LP (which can accidentally happen), the user can use the firearm 10 to move the locking element 120 out of the locking position LP by pushing against the locking element 120 with said firearm 10 as the user guides the firearm 10 into the holster 100. Advantageously, the user can stay focused on the situation without looking towards the holster 100 to accommodate the firearm 10 in the holster 100.

Preferably, the holster 100 further comprises a fastening element 150 mounted to the holster 100. The holster 100 being rotatable relative to the fastening element 150, wherein, when rotated, the holster 100 snaps-in into predefined snap-in positions provided in a given rotation angle of the holster 100. Preferably, the holster 100 is rotatable 360° relative to the fastening element 150 (e.g., rotatable around the y-axis). In Fig. 4 and Fig. 5 the fasting element 150 is shown exemplary as two parts 151, 152 comprising matching teeth. The inner part 151 is mounted to the holster 100 and the outer part 152 being rotatable around the inner part 151. As the outer part 152 is rotated it snaps into said predefined snap-in positions wherein the matching teeth interact to fix the outer part 152 relative to the inner part 151. The outer part 152 is designed to be fastened, for example, to a belt of the user.

Furthermore, the holster 100 further comprises a firearm sensor unit 160, which firearm sensor unit 160 is configured to interact with the firearm 10 when said firearm 10 is accommodated in the holster 100 in order to generate or interrupt an electrical signal. For example, the firearm sensor unit 160 can be designed as an inductive sensor or capacitive sensor, wherein said sensor interacts with the firearm 10 via an electromagnetic field in the area of the sensor. Alternatively, the firearm sensor unit 160 can be designed as a switch, wherein said switch interacts with the firearm 10 in that the firearm 10 actuates the switch when said firearm 10 is accommodated in the holster 100. The firearm sensor unit 160 is merely shown exemplary in Fig. 5. In case the firearm 10 is drawn from the holster 100, due to the absence of the firearm 10, the firearm sensor unit 160 may generate or interrupt the electrical signal. So, the firearm sensor unit 160 may be designed to generate or interrupt certain electrical signals in cases, wherein the firearm 10 is drawn from or accommodated in the holster 100.

The holster 100 preferably further comprises a communication unit 170, which communication unit 170 is configured to control an external device depending on the generated or interrupted electrical signal by the firearm sensor unit 160 when the holster 100 is used. For example, the communication unit 170 is designed as microprocessor-based hardware, like as a microcontroller. The communication unit 170 is merely shown exemplary in Fig. 5. The communication unit 170 may be connected to the firearm sensor unit 160 via a suitable wired or wireless connection. Furthermore, the communication unit 170 may be connected to the external device via a suitable wired or wireless connection (e.g., via Bluetooth). The external device might be a bodycam of the user or a tactical accessory for the firearm 10, like an electronic sight or similar. The communication unit 170 may control said external device, when the holster 100 is used, in that the external device is activated or deactivated depending on the electrical signal from the firearm sensor unit 160.

The holster 100 may further comprise an electric energy source (not shown in the figures) having electrical contacts. For example, the electric energy source is designed for charging the electrical energy storage 25 of the illumination module 1 of the firearm 10, when said firearm 10 is accommodated in the holster 100 and when the electrical contacts of the electric energy source of the holster 100 are connected to the electrical contacts 5 of the illumination module 1. The electric energy source of the holster 100 may be designed as having a number of accumulators and/or a number of capacitors. The electric energy source of the holster 100 preferably comprise a standardized port, like a USB-C port, wherein said electric energy source of the holster 100 can be recharged by connecting said standardized port, like the USB-C port, to an external power source.

The afore-mentioned features of the holster 100 enable a versatile and efficient usage of said holster 100 by the user, especially improving gun safety by introducing a simple and easy-to-use locking mechanism 120.

## Claims

1. Firearm (10) with an illumination module (1), said illumination module (1) is mounted on the firearm (10), wherein the illumination module (1) comprises a light source (4) and a switch element (3) for activating or deactivating the light source (4), wherein the firearm (10) comprises a barrel (11) with an axial barrel axis (BA), wherein the illumination module (1) further comprises a lens array (2) with at least two lenses (21, 22), the lenses (21, 22) emitting light received from the light source (4) when the light source (4) is activated, a first one of the at least two lenses (21, 22) of the lens array (2) emitting a first cone-shaped light beam (LB1) with a first radiation angle (α1) and a second one of the at least two lenses (21, 22) of the lens array (2) emitting a second cone-shaped light beam (LB2) with a second radiation angle (α2), wherein the first and second light beams (LB1, LB2) are emitted at least partially in direction of the barrel axis (BA) and away from the firearm (10), **characterized in that** the first radiation angle (α1) of the first light beam (LB1) and the second radiation angle (α2) of the second light beam (LB2) are different.

2. Firearm (10) according to claim 1, **characterized in that** the illumination module (1) comprises an electrical energy storage (25) and electrical contacts (5) for charging the electrical energy storage (25) when an electric energy source is connected to the electrical contacts (5), wherein the illumination module (1) is configured to automatically deactivate the light source (4) when the electrical contacts (5) are connected to the electric energy source.

3. Firearm (10) according to claim 2, **characterized in that** the electrical contacts (5) of the firearm (10) are connected to the electrical energy source, when the firearm (10) is arranged in a holster (100) for the firearm (10).

4. Firearm (10) according to any of the preceding claims, **characterized in that** the illumination module (1) further comprises a programmable control unit (20), which is designed to control an intensity of the light emitted by the light source (4).

5. Firearm (10) according to any of the preceding claims, **characterized in that** the light source (4) comprises at least one light emitting element (6) for each one of the at least two lenses (21, 22).

6. Firearm (10) according to any of the preceding claims, **characterized in that** the illumination module (1) further comprises at least one laser (7a, 7b) and a laser switch element for activating or deactivating the at least one laser (7a, 7b), said laser (7a, 7b), when activated, emitting a laser light beam (LLBa, LLBb) at least partially in direction of the barrel axis (BA) and away from the firearm (10).

7. Firearm (10) according to claim 6, **characterized in that** the programmable control unit (20) is further provided to control an intensity of the at least one laser (7a, 7b).

8. Firearm (10) according to claim 6 or 7, **characterized in that** the illumination module (1) further comprises a laser receiver sensor (8) for detecting at least a portion of the emitted laser light beam (LLBa, LLBb) being reflected back towards the firearm (10) by a targeted object (30) **and in that** the illumination module (1) further comprises an evaluation unit for determining an object distance (D) between the illumination module (1) and the targeted object (30) based on the reflected portion of said laser light beam (LLBa, LLBb).

9. Firearm (10) according to claim 8, **characterized in that** the programmable control unit (20) is further provided to control the intensity of the light emitted by the light source (4) based on the determined object distance (D).

10. Firearm (10) according to claim 6, **characterized in that** the illumination module (1) comprises two lasers (7a, 7b), wherein each of the two lasers (7a, 7b) emit laser light with a certain wavelength, wherein the wavelength of the laser lights of the two lasers (7a, 7b) are different.

11. Firearm (10) according to claim 4 or 5, **characterized in that** the illumination module (1) comprises a temperature sensor, which is arranged in the area of the light source (4), wherein the programmable control unit (20) is further designed to control the intensity of the light emitted by the light source (4) based on a temperature measured by the temperature sensor.

12. A holster (100) for accommodating a firearm (10), wherein the holster (100) comprises a locking mechanism (110), which locking mechanism (110) comprises a locking element (120) and an actuator element (130), wherein the locking element (120) is movable between a locking position (LP), in which the firearm (10) is locked in the holster (100), and an unlocking position (UP), in which the firearm (10) may be removed from the holster (100), wherein the actuator element (130) is connected to the locking element (120) and the actuator element (130) is prestressed when the locking element (120) is in the locking position (LP), wherein the locking element (120) is held in the locking position (LP) by holding means (140), **characterized in that** when the locking element (120) is moved out of the locking position (LP), the prestressed actuator element (130) is relieved and acts on the locking element (120) to move said locking element (120) into the unlocking position (UP).

13. Holster (100) according to claim 12, **characterized in that** the prestressed actuator element (130) holds the locking element (120) in the locking position (LP).

14. Holster (100) according to claim 12 or 13, **characterized in that** the holster (100) further comprises a fastening element (150) mounted to the holster (100), the holster (100) being rotatable relative to the fastening element (150), wherein, when rotated, the holster (100) snaps-in into predefined snap-in positions provided in a given rotation angle of the holster (100).

15. Holster (100) according to any of the claims 12 to 14, **characterized in that** the holster (100) further comprises a firearm sensor unit (160), which firearm sensor unit (160) is configured to interact with the firearm (10) when said firearm (10) is accommodated in the holster (100) in order to generate or interrupt an electrical signal **and in that** the holster (100) further comprises a communication unit (170), which communication unit (170) is configured to control an external device depending on the generated or interrupted electrical signal by the firearm sensor unit (160) when the holster (100) is used.
